# EUROPEAN PATENT SPECIFICATION

(11) **EP 3 343 035 B1**
(45) Date of publication and mention of the grant of the patent: **26.08.2020**
(21) Application number: 17210704.7
(22) Date of filing: 27.12.2017
(51) Int. Cl.: F04B 35/04, F04B 39/12

(54) **RECIPROCATING COMPRESSOR**
HUBKOLBENVERDICHTER
COMPRESSEUR À MOUVEMENT ALTERNATIF

(30) Priority: 28.12.2016 KR 20160180835
(43) Date of publication of application: 04.07.2018
(73) Proprietor: LG Electronics Inc., Yeongdeungpo-gu Seoul, 07336 (KR)
(72) Inventor: CHO, Jaeho, 08592 Seoul (KR); KIM, Dowan, 08592 Seoul (KR)
(74) Representative: Ter Meer Steinmeister & Partner

(56) References cited:
- WO-A1-2004/074684
- US-A- 3 871 800
- US-A1- 2003 052 484
- US-A1- 2010 226 805
- US-A1- 2016 131 125

## Description

### BACKGROUND

### 1. Field

A reciprocating compressor is disclosed herein.

### 2. Background

A reciprocating compressor refers to an apparatus that suctions in, compresses, and discharges a refrigerant through a reciprocating motion of a piston in a cylinder. The reciprocating compressor may be classified into a connection type reciprocating compressor and a vibration type reciprocating compressor according to a method of driving a piston. The connection type reciprocating compressor uses a method of compressing refrigerant through a reciprocating motion of a piston connected to a rotary shaft of a drive through a connecting rod in a cylinder, and the vibration type reciprocating compressor uses a method of compressing refrigerant through a reciprocating motion of a piston, which is connected to a movable element of a reciprocating motor to vibrate, in a cylinder.

The connection type reciprocating compressor is disclosed in Korean laid-open Patent Publication No. 10-2010-0085760 (hereinafter referred to as "Document 1"),. The disclosed connection type reciprocating compressor includes a housing shell forming a closed space, a drive unit or drive provided in the housing shell to provide a drive force, a compression unit connected to a rotary of the drive and configured to compress refrigerant through a reciprocating motion of a piston in a cylinder using the drive force from the drive, and a suction and discharge unit configured to suction in refrigerant and to discharge the compressed refrigerant through the reciprocating motion of the compression unit. The suction and discharge unit is connected with a discharge hose that discharges the compressed refrigerant and the discharge hose is coupled to a discharge pipe coupled to the shell of the compressor.

According to the conventional reciprocating compressor, as the discharge hose and the discharge pipe are not stably coupled, the discharge hose may be moved by pressure of the discharge refrigerant, and thus, brought into contact with the housing shell having a high temperature, thereby being damaged. In addition, as coupling between the discharge hose and the discharge pipe may be loosened, refrigerant may leak.

In order to solve this problem, a compressor including a connector that supports a discharge hose is disclosed in European Patent No. 2,207,962 (hereinafter, referred to as "Document 2). The connector is connected to a discharge hose and a discharge pipe. In addition, an end of the discharge pipe is deformed in a state in which the connector is inserted into the discharge pipe, thereby preventing the connector from being separated from the discharge pipe.

In Document 2, as the connector is made of plastic, the connector may be damaged when the end of the discharge pipe is deformed.

US 2016/131125 A1 presents a reciprocating compressor. The reciprocating compressor has a connection member configured to connect the discharge hose to the discharge pipe, wherein at least a portion of the connection member is inserted into an inner portion of the discharge pipe, and another portion thereof is supported outside the discharge pipe. The discharge hose is inserted into the portion supported outside the discharge pipe. The connection member is made of plastic.

US 3 871 800 A presents a hermetic compressor unit comprising a hermetic casing containing a compressor including a cylindrical block having an arcuate surface engaging the inner surface of the casing and a suction tube assembly for connecting the compressor to a refrigeration system. The suction tube assembly comprises a tubular steel connector including an end portion extending into an opening in the casing and a sleeve member made from a metal having a higher ductility than steel that includes a reduced end extending into a suction passage in the block and an enlarged portion engaging the suction tube connector. The hermetic compressor of US 3 871 800 A further includes a steel tubular fitting inserted through the connector including an end portion extending into the reduced portion of the sleeve member and a shoulder portion extending into the enlarged portion of the sleeve member that simultaneously compresses the sleeve member in the suction passage and connector to effectively seal the compressor casing and suction tube assembly to the compressor. In a state in which components of the compressor are assembled in the shell, the discharge hose, the connector, and the discharge pipe are disposed to penetrate through the shell in a direction perpendicular to the shell. In this case, in a process of assembling the connector in the shell, it is not easy to assemble the connector using tools within a restricted space of the shell.

In addition, in the process of assembling the connector, it is difficult to constantly maintain a depth of a connector inserted into the discharge pipe. Thus, as the insertion depth of the discharge hose supported by the connector may be different from a set or predetermined depth, noise or vibration may occur.

### SUMMARY

In one aspect of present invention, a reciprocating compressor, comprising: a shell to which a discharge pipe is coupled; a cylinder provided inside of the shell and configured to compress a refrigerant; a discharge hose configured to discharge the refrigerant compressed in the cylinder; a connector coupled to the discharge hose and provided inside of the discharge pipe; and a hose fixing member provided on an outer circumferential surface of the discharge hose and configured to support the discharge hose.

Preferably, the connector may be made of steel.

Preferably, the reciprocating compressor may further comprise at least one ring member provided on an outer circumferential surface of the connector and contacting an inner circumferential surface of the discharge pipe.

Preferably, the connector may include a connector body having at least one groove in which the at least one ring member is mounted; and an insertion portion that extends from the connector body and is coupled to the discharge hose, the insertion portion being inserted into the hose fixing member.

Preferably, the at least one ring member may include a first ring member and a second ring member, and wherein the at least one groove of the connector body includes first and second grooves in which the first and second ring members are mounted.

Preferably, the insertion portion may include an insertion hole, into which the discharge hose is inserted; and a step formed on an inner circumferential surface of the insertion portion and configured to support the discharge hose inserted through the insertion hole.

Preferably, the discharge pipe may include a caulking portion that contacts the at least one ring member; and an enlargement portion provided at one side of the caulking portion and obliquely extending to enlarge an inner diameter of the caulking portion.

Preferably, the reciprocating compressor may further comprise a locking step provided on the hose fixing member or the connector body, the locking step being supported by the enlargement portion.

Preferably, an outer diameter of the hose fixing member may be greater than an inner diameter of the caulking portion.

Preferably, the hose fixing member may include a hose penetration hole to which the discharge hose is coupled.

Preferably, the discharge hose may be disposed to extend through the hose fixing member.

Preferably, the hose fixing member may be coupled to an upper portion of the discharge pipe, and wherein a height of a lower end of the hose fixing member is equal to or greater than a height of an upper end of the discharge pipe.

Preferably, the hose fixing member may include a clip or a clamp.

Preferably, the hose fixing member may include a fixing body rounded to surround an outer circumferential surface of the discharge hose, the fixing body having a cutout; a first manipulation portion provided at a first side of the fixing body; and a second manipulation portion provided at a second side of the fixing body and inserted into the cutout.

Preferably, the connector may include a connector body provided with at least one ring member; and an insertion portion that extends from the connector body and is inserted into the discharge hose.

Preferably, the discharge hose may include a first portion having a first inner diameter; and a second portion having a second inner diameter greater than the first inner diameter and inserted into the insertion portion, wherein the clip or the clamp is coupled to the second portion.

In another aspect of present invention, a reciprocating compressor, comprises: a shell to which a discharge pipe is coupled; a cylinder provided inside of the cylinder and configured to compress a refrigerant; a discharge hose configured to discharge the refrigerant compressed in the cylinder; a connector coupled to the discharge hose, wherein the connector is made of steel; a hose fixing member coupled to the connector and having a hose penetration hole, into which the discharge hose is inserted; and at least one ring member provided at an outer circumferential surface of the connector and contacting an inner circumferential surface of the discharge pipe.

Preferably, the hose fixing member may be made of plastic.

Preferably, the hose fixing member may be insert-injected in a state in which the discharge hose and the connector are coupled.

Preferably, the hose fixing member may support at least a portion of the connector coupled to the discharge hose.

Preferably, the connector may include a connector body having a groove in which the at least one ring member is mounted; an insertion portion that extends from the connector body and coupled to the discharge hose; and at least one projection provided on an outer circumferential surface of the insertion portion, the at least one projection being coupled to the discharge hose or the hose fixing member.

In still another aspect of present invention, a reciprocating compressor, comprises: a shell to which a discharge pipe is coupled; a cylinder provided inside of the cylinder and configured to compress a refrigerant; a discharge hose configured to discharge the refrigerant compressed in the cylinder; a connector coupled to the discharge hose; a hose fixing member coupled to the connector and having a hose penetration hole, into which the discharge hose is inserted; and at least one ring member provided at an outer circumferential surface of the connector and contacting an inner circumferential surface of the discharge pipe, wherein the connector includes: a connector body having at least one groove in which the at least one ring member is mounted; and an insertion portion that extends from the connector body and is coupled to the discharge hose, the insertion portion being inserted into the hose fixing member.

### BRIEF DESCRIPTION OF THE DRAWINGS

Embodiments will be described in detail with reference to the following drawings in which like reference numerals refer to like elements, and wherein:
FIG. 1 is a perspective view showing a reciprocating compressor according to an embodiment;
FIG. 2 is a cross-sectional view showing the reciprocating compressor according to the embodiment of FIG. 1;
FIG. 3 is a diagram showing some components of the reciprocating compressor according to the embodiment of FIG. 1;
FIG. 4 is a front exploded perspective view showing a state of connecting a muffler assembly and a hose assembly according to the embodiment of FIG. 1;
FIG. 5 is a rear exploded perspective view showing a state of connecting the muffler assembly and the hose assembly according to the embodiment of FIG. 1;
FIG. 6 is a perspective view showing a configuration of the hose assembly according to the embodiment of FIG. 1;
FIG. 7 is an exploded perspective view showing the configuration of the hose assembly according to the embodiment of FIG. 1;
FIG. 8 is a cross-sectional view showing a state of coupling the hose assembly and a discharge pipe according to the embodiment of FIG. 1;
FIG. 9 is a view showing a state of coupling the hose assembly and the discharge pipe according to the embodiment of FIG. 1;
FIG. 10 is a view showing a state of coupling a hose assembly and a discharge pipe according to another embodiment;
FIG. 11 is a perspective view showing a configuration of a hose assembly according to another embodiment;
FIG. 12 is an exploded perspective view showing a configuration of the hose assembly according to the embodiment of FIG. 11;
FIG. 13 is a view showing a state of coupling the hose assembly and a discharge pipe according to the embodiment of FIG. 11; and
FIG. 14 is a view showing a state of coupling the hose assembly and the discharge pipe to a shell according to the embodiment of FIG. 11.

### DETAILED DESCRIPTION

Hereinafter, embodiments will be described with reference to the accompanying drawings. The following embodiments are provided as examples in order to help the full understanding. Accordingly, the embodiments are not limited to the following embodiments and may be variously embodied. For a better understanding, the figures are not necessarily to scale and sizes of some components are exaggerated.

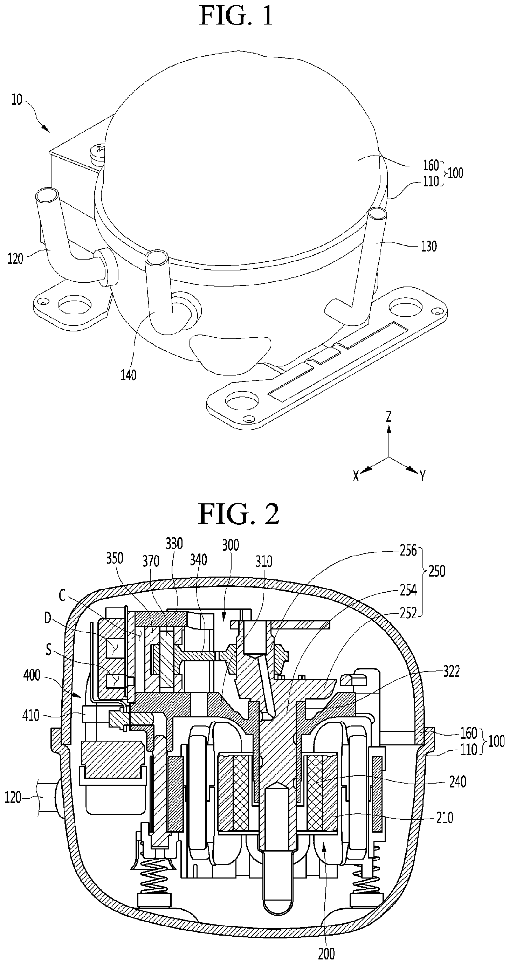

FIG. 1 is a perspective view showing a reciprocating compressor according to an embodiment. FIG. 2 is the cross-sectional view showing the reciprocating compressor according to the embodiment of FIG. 1.

Referring to FIGS. 1 and 2, a reciprocating compressor 10 according to an embodiment may include a shell 100 forming an outer appearance thereof. A closed space may be formed in the shell 100 and various components of the compressor 10 may be received in the closed space. The shell 100 may be made, for example, of a metal.

The shell 100 may include a lower shell 110 and an upper shell 160 provided above the lower shell 110. More specifically, the lower shell 110 may have a substantially semispherical shape and form a reception space to receive various components, such as a drive unit or drive 200, a compression unit 300, and a suction and discharge unit 400 along with the upper shell 160. The lower shell 110 may be referred to as a "compressor body" and the upper shell 160 may be referred to as a "compressor cover".

The lower shell 110 may include a suction pipe 120, a discharge pipe 130, a process pipe 140, and a power supply (not shown). The suction pipe 120 may supply refrigerant into the shell 100 and penetrate through the lower shell 110. The suction pipe 120 may be mounted separately from or integrally with the lower shell 110.

The discharge pipe 130 may discharge compressed refrigerant from the shell 100 and penetrate through the lower shell 110. The discharge pipe 130 may be formed separately from or integrally with the lower shell 110.

The discharge pipe 130 may be connected with a discharge hose 510 of the suction and discharge unit 400. Refrigerant supplied into the suction pipe 120 and compressed by the compression unit 300 may be discharged to the discharge pipe 130 through the discharge hose 510 of the suction and discharge unit 400. The process pipe 140 may be provided to supply refrigerant into the shell 100 after closing an inside of the shell 100 and may penetrate through the lower shell 110.

The upper shell 160 may form the reception space along with the lower shell 110 and have an approximately semi-spherical shape like the lower shell 110. The upper shell 160 may close an upper side of the lower shell 110 to form a closed space therein.

The drive unit 200 may be provided in the internal space of the shell 100 to provide a drive force. The drive unit 200 may include a stator 210, a rotor 240, and a rotary shaft 250. The stator 210 may include a stator core, and a coil coupled to the stator core.

When power is applied to the coil, the coil generates an electromagnetic force to perform electromagnetic interaction along with the stator core and the rotor 240. Therefore, the drive unit 200 may generate a drive force for the reciprocating motion of the compression unit 300.

A magnet may be provided in the rotor 240 and rotatably provided in the coil. A rotational force generated by rotation of the rotor 240 acts as a drive force capable of driving the compression unit 200.

The rotary shaft 250 may be rotated along with the rotor 240 and may penetrate through the rotor 240 in an upward-and-downward direction. In addition, the rotary shaft 250 may be connected to a connecting rod 340 to transfer the rotational force generated by the rotor 240 to the compression unit 300.

More specifically, the rotary shaft 250 may include a base shaft 252, a rotational plate 254, and an eccentric shaft 256. The base shaft 252 may be mounted in the rotor 240 in the upward-and-downward direction (Z axis) or a longitudinal direction. When the rotor 240 rotates, the base shaft 252 may rotate along with the rotor 240. The rotational plate 254 may be mounted at one side of the base shaft 252 and may be rotatably mounted in a cylinder block 310.

The eccentric shaft 256 may protrude upward at a position located eccentrically from a center of an axis of the base shaft 252 and eccentrically rotate when the rotational plate 254 rotates. The connector rod 340 may be mounted on the eccentric shaft 256. According to eccentric rotation of the eccentric shaft 256, the connecting rod 340 may linearly reciprocate in a frontward-and-rearward direction (X axis).

The compression unit 300 may receive a drive force from the drive unit 200 and compress a refrigerant through a linear reciprocating motion. The compression unit 300 may include the cylinder block 310, the connecting rod 340, a piston 350, and a piston pin 370.

The cylinder block 310 may be provided above the rotor 240. In the cylinder block 310, a shaft opening 322, through which the rotary shaft 250 may penetrate, may be formed. A lower side of the cylinder block 310 may rotatably support the rotary plate 254.

A cylinder 330 may be provided in front of the cylinder block 310 to receive the piston 350. The piston 350 may reciprocate in the frontward-and-rearward direction and a compression space C, in which refrigerant may be compressed, may be formed in the cylinder 330.

The connecting rod 340 may transfer a drive force provided by the drive unit 200 to the piston 350 and switch rotational motion of the rotary shaft 250 into a linear reciprocation motion. More specifically, the connecting rod 340 may linearly reciprocate in the frontward-and-rearward direction upon rotation of the rotary shaft 250.

The piston 350 may compress the refrigerant and may be provided in the cylinder 330. In addition, the piston 350 may be connected to the connecting rod 340 and linearly reciprocate in the cylinder 330 according to the motion of the connecting rod 340. According to the recipro-eating motion of the piston 350, refrigerant received through the suction pipe 120 may be compressed in the cylinder 330.

The piston pin 370 may couple the piston 350 and the connecting rod 340. More specifically, the piston pin 370 may penetrate through the piston 350 and the connecting rod 340 in the frontward-and-rearward direction to connect the piston 350 and the connecting rod 340.

The suction and discharge unit 400 may be configured to suction in refrigerant to be supplied to the compression unit 300 and to discharge the compressed refrigerant from the compression unit 300. The suction and discharge unit 400 may include a muffler assembly 410 and the discharge hose 510.

The muffler assembly 410 may transfer the refrigerant suctioned in from the suction pipe 120 into the cylinder 330 and transfer the refrigerant compressed in the compression space C of the cylinder 330 to the discharge pipe 130. In the muffler assembly 410, a suction space S that receives refrigerant suctioned in from the suction pipe 120 and a discharge space D that receives refrigerant compressed in the compression space C of the cylinder 330 may be provided.

More specifically, the refrigerant suctioned in from the suction pipe 120 may be supplied into the suction space S of a suction and discharge tank 426 through suction mufflers 430 and 420. In addition, the refrigerant compressed in the cylinder 330 may pass the discharge mufflers 425 and 438 through the discharge space D of the suction and discharge tank 426, thereby being discharged from the compressor 10 through the discharge hose 510.

The discharge hose 510 may transfer the compressed refrigerant received in the discharge space D to the discharge pipe 130 and be coupled to the muffler assembly 410. More specifically, one or a first side of the discharge hose 510 may be coupled to the muffler assembly 410 to communicate with the discharge space D and the other or a second side of the discharge hose 510 may be coupled to the discharge pipe 130 through a connector 530.

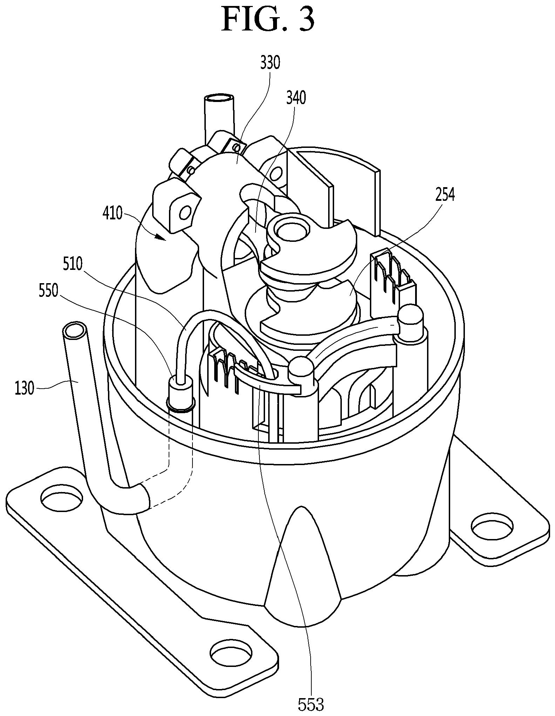

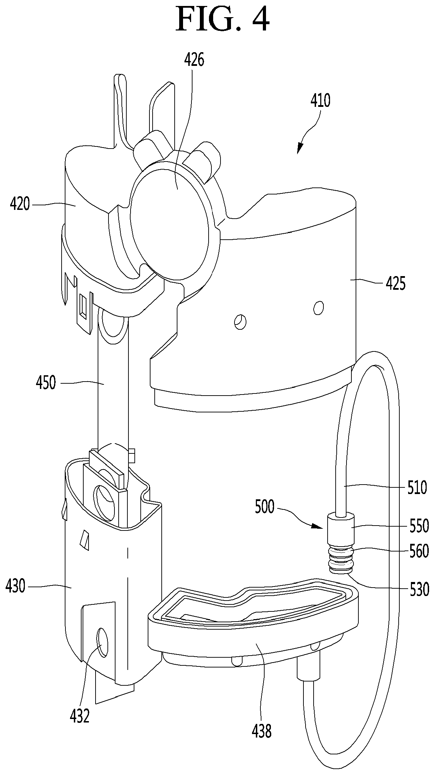

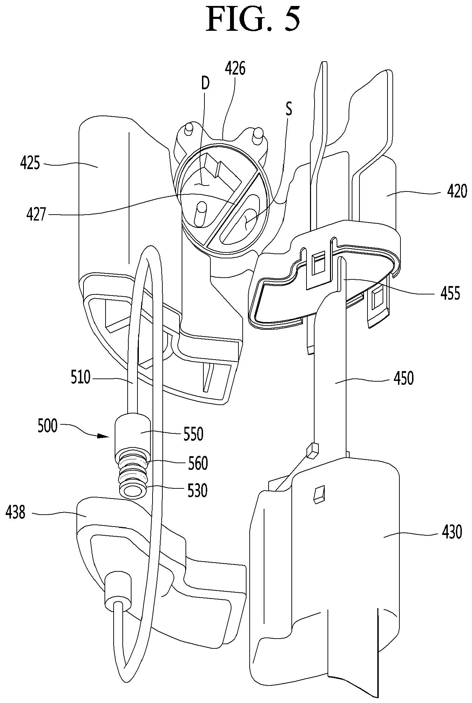

FIG. 3 is a diagram showing some components of the reciprocating compressor according to the embodiment of FIG. 1. FIG. 4 is a front exploded perspective view showing a state of connecting a muffler assembly and a hose assembly according to the embodiment of FIG. 1. FIG. 5 is a rear exploded perspective view showing a state of connecting the muffler assembly and the hose assembly according to the embodiment of FIG. 1.

Referring to FIGS. 3 to 5, the muffler assembly 410 according to the embodiment of FIG. 1 may include first assembling part or portion (suction muffler) 430, second assembling part or portion (suction muffler) 420, third assembling part or portion (discharge muffler) 425, and fourth assembling part or portion (discharge muffler) 438. The first assembling portion 430 may include a suction hole 432 that communicates with the suction pipe 120. The suction hole 432 may be located adjacent to an inside of the lower shell 110, at a point at which the suction pipe 120 is coupled thereto. An internal pipe 450 may be mounted in the first assembling portion 430. For example, the internal pipe 450 may include an approximately cylindrical pipe.

The internal pipe 450 may extend from the first assembling portion 430 upward, thereby being coupled to the second assembling portion 420. The second assembling portion 420 may include a pipe fixing part or portion coupled with the internal pipe 450. The internal pipe 450 may include a second coupling part or portion 455 coupled to the pipe fixing part.

The second assembling portion 420 may be coupled to an upper side of the first assembling portion 430. At least a portion of the internal pipe 450 may be located inside the first assembling portion 430 and another portion thereof may be located inside the second assembling portion 420.

When the first assembling portion 430 and the second assembling portion 420 are coupled, a suction flow channel in which the refrigerant supplied to the compressor 10 may flow toward the cylinder 330 may be formed in the first and second assembling portions 430 and 420. Accordingly, the first and second assembling portions 430 and 420 may be collectively referred to as a "suction muffler".

The third assembling portion 425 may be spaced apart from one side of the second assembling portion 420. In addition, the suction and discharge tank 426 forming the suction space S and the discharge space D may be mounted between the second assembling portion 420 and the third assembling portion 425. The suction and discharge tank 426 may include a partition 427 that partitions an internal space of the suction and discharge tank 426 into the suction space S and the discharge space D. In addition, a valve assembly (not shown) may be provided at one side of the suction and discharge tank 426. The valve assembly may include a suction valve (not shown) that opens and closes the suction space S, and a discharge valve (not shown) that opens and closes the discharge space D.

The fourth assembling portion 438 may be coupled to a lower side of the third assembling portion 425. When the third assembling portion 425 and the fourth assembling portion 438 are coupled, a discharge flow channel in which the refrigerant discharged from the cylinder 330 flows toward the discharge pipe 130 is formed in the first and second assembling portion 425 and 450. Accordingly, the third and fourth assembling portion 425 and 450 may be collectively referred to as a "discharge muffler".

The fourth assembling portion 438 may be coupled with the discharge hose 510. The discharge hose 510 may transfer the refrigerant in the fourth assembling portion 438 to the discharge pipe 130. One or a first side of the discharge hose 510 may be coupled to the fourth assembling portion 438 and the other or a second side thereof may be coupled to the discharge pipe 130 through the connector 530. The discharge hose 510 may extend from the fourth assembling portion 438 toward the discharge pipe 130 and may be configured to be curved or bent at least once to be provided in the restricted internal space of the shell 100.

A substantially central part or portion of the discharge hose 510 may be supported by a hose fixing part or portion 553. The hose fixing portion 553 may be configured to clamp the discharge hose 510. For example, the hose fixing portion 553 may have a shape of tongs and may be disposed to surround at least a portion of an outer circumferential surface of the discharge hose 510. The discharge hose 510 may be located to be spaced apart from an inner side surface of the shell 100 by the hose fixing portion 553.

The discharge pipe 130 may penetrate through the lower shell 110 to extend to the inside of the lower shell 110 and the discharge hose 510 may be connected to the discharge pipe 130. For example, the discharge pipe 130 may penetrate through the lower shell 110 and may be bent and extended upward. By this configuration, in a state in which the discharge pipe 130 is assembled in the shell 100, the connector 530 or the discharge hose 510 may be easily assembled in the discharge pipe 130. That is, although the internal space of the shell 100 is small and crowded due to the components of the compressor, it may be easy to assemble the connector 530 or the discharge hose 510 using tools, for example.

The discharge hose 510 may be made, for example, of rubber or plastic, and the discharge pipe 130 may be made, for example, of metal, such as copper (Cu). Hereinafter, a configuration of a hose assembly including the discharge hose 510 will be described.

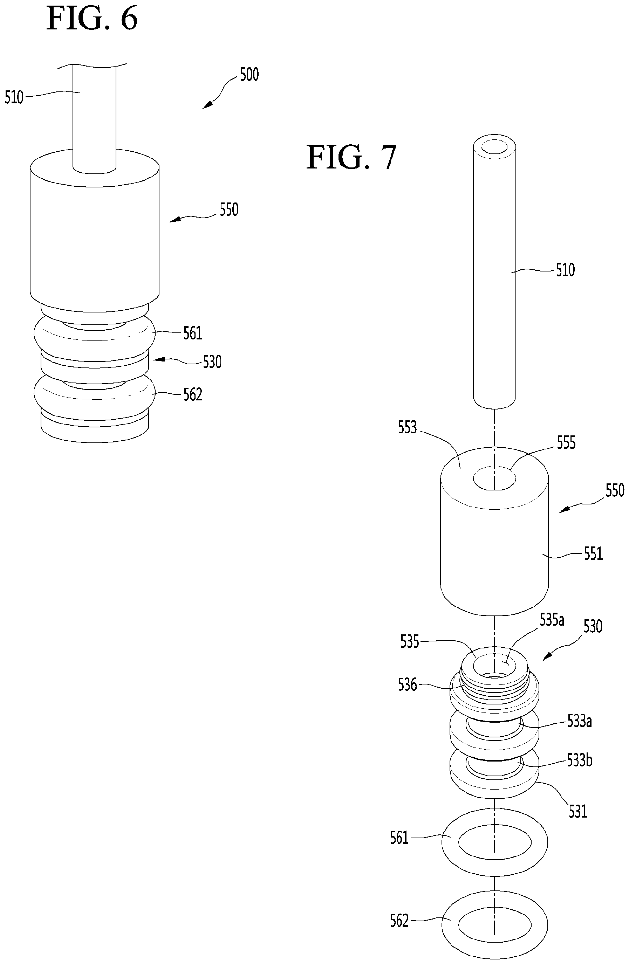

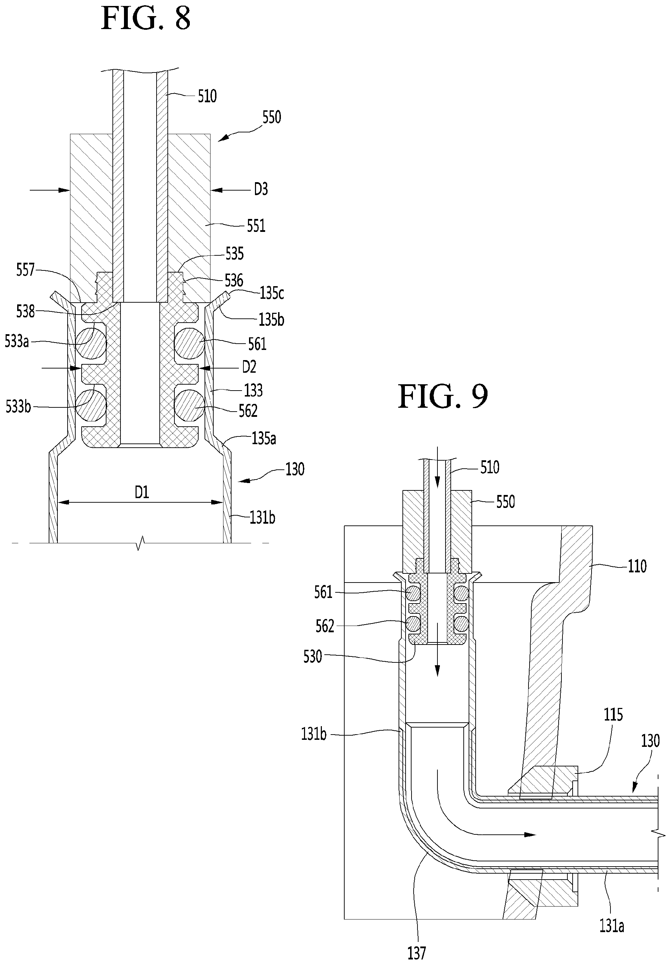

FIG. 6 is a perspective view showing a configuration of the hose assembly according to the embodiment of FIG. 1. FIG. 7 is an exploded perspective view showing a configuration of the hose assembly according to the embodiment of FIG. 1. FIG. 8 is a cross-sectional view showing a state of coupling the hose assembly and the discharge pipe according to the embodiment of FIG. 1. FIG. 9 is a view showing a state of coupling the hose assembly and the discharge pipe according to the embodiment of FIG. 1.

Referring to FIGS. 6 to 9, the hose assembly 500 according to this embodiment may include the discharge hose 510 connected to the discharge mufflers 425 and 438 to guide discharge of refrigerant and the connector 530 connected to the discharge hose 510 to connect the discharge hose 510 with the discharge pipe 130. The hose assembly 500 may further include a hose fixing member 550 provided on an outer circumferential surface of the discharge hose 510 to support the discharge hose 510. The hose fixing member 550 may be disposed outside the discharge pipe 130.

More specifically, the connector 530 may be made, for example, of metal. For example, the connector 530 may be made, for example, of steel. As the connector 530 is made of steel having a relatively high strength, it is possible to prevent the connector 530 from being damaged when the discharge pipe 130 is coupled to the outside of the connector 530 to perform a caulking process.

The connector 530 may include a connector body 531 having first and second grooves 533a and 533b. The connector body 531 may have a substantially cylindrical shape and the first and second grooves 533a and 533b may be formed in a circumferential direction of the connector body 531 and disposed to be spaced apart from each other in the upward-and-downward direction.

The first and second grooves 533a and 533b may include the first groove 533a formed in an upper portion of the connector body 531 and the second groove 533b formed in a lower portion of the connector body 531. A ring member 560 (561, 562) may be mounted in each of the first and second grooves 533a and 533b. More specifically, the ring member may include first ring member 561 mounted in the groove 533a and second ring member 562 mounted in the second groove 533b. The first and second ring members 561 and 562 may be made, for example, of rubber or synthetic resin.

The connector body 531 may be inserted into the discharge pipe 130 in a state in which the first and second ring members 561 and 562 are coupled to an outer circumferential surface of the connector body 531. By the caulking process of reducing an inner diameter of the discharge pipe 130, the first and second ring members 561 and 562 may be brought into contact with or adhered to a caulking part or portion 133 of the discharge pipe 130.

That is, as the first and second ring members 561 and 562 are interposed between the outer circumferential surface of the connector 530 and an inner circumferential surface of the discharge pipe 130, the connector 530 may be stably supported inside the discharge pipe 130. If a plurality of ring members is provided, such an effect may be further improved.

The connector 530 may further include an insertion part or portion 535 that extends from the connector body 531 and having an insertion hole 535a, into which the discharge hose 510 may be inserted. The insertion portion 535 may have a hollow cylindrical shape. The insertion hole 535a may be formed in an upper surface of the insertion portion 535.

The discharge hose 510 may be inserted into the insertion portion 535 through the insertion hole 535a. A stepped part or step 538 may be formed on an inner circumferential surface of the insertion portion 535. An end of the discharge hose 510 may be supported by the step 538. By the step 538, a depth of the discharge hose 510 inserted into the connector 530 may be restricted to a set or predetermined depth. The predetermined depth may be a distance from the insertion hole 535a to the step 538.

The hose fixing member 550 may be disposed to surround the discharge hose 510. The hose fixing member 550 may be made, for example, of plastic. For example, the hose fixing member 550 may be formed using a method of injecting liquid resin onto an outside of the discharge hose 510 in a state in which the connector 530 and the discharge hose 510 are coupled.

The hose fixing member 550 may surround the discharge hose 510 and the insertion portion 535 of the connector 530. More specifically, the hose fixing member 550 may include a fixing body 551 having a cylindrical shape and a coupling surface 552 forming an upper surface of the fixing body 551 and coupled with the discharge hose 510.

A hose penetration part or portion or hole 555, into which the discharge hose 510 may be inserted, may be formed in the coupling surface 552. The hose penetration portion 555 may extend from an upper surface to a lower surface of the hose fixing member 550. Accordingly, the discharge hose 510 may penetrate through the hose fixing member 550 from an upper end to a lower end of the hose fixing member 550.

The connector 530 may be coupled to a lower portion of the hose fixing member 550. More specifically, the insertion portion 535 of the connector 530 may be inserted into the hose fixing member 550 and an outer circumferential surface of the insertion portion 535 may be coupled to a lower inner circumferential surface of the hose fixing member 550.

A projection 536 may be provided on the outer circumferential surface of the insertion portion 535. The projection 536 may be provided in the circumferential direction of the insertion portion 535. By providing the projection 536, the insertion portion 535 may be locked in the hose fixing member 550. Accordingly, the insertion portion 535 and the hose fixing member 550 may be stably coupled and downward movement of the insertion portion 535 may be restricted. As a result, the connector 530 may be prevented from being further inserted into the discharge pipe 130.

The discharge pipe 130 may include a pipe body 131 (131a, 131b) coupled to the lower shell 110. The pipe body 131 may include a first body 131a that penetrates through the lower shell 110, and a second body 131b that extends upward from the first body 131.

The lower shell 110 may include a pipe coupling part or portion 115 coupled to the first body 131a. The pipe coupling portion 115 may be inserted into the lower shell 110 and disposed to surround an outer circumferential surface of the first body 131a.

The discharge pipe 130 may further include a bending part or portion 137 provided between the first body 131a and the second body 131b. The bending portion 137 may be bent at a predetermined curvature to extend from the first body 131a to the second body 131b. In addition, the hose assembly 500 may be coupled to an upper portion of the second body 131b. By the discharge pipe 130 and the hose assembly 500, even in the restricted internal space of the shell 100, the connector 530 and the discharge hose 510 may be inserted into the discharge pipe 130 downward at an upper side of the discharge pipe 130, thereby easily being assembled.

An inner diameter of the pipe body 131 may have a first diameter D1. For example, the inner diameter of the second body 131b, to which the hose assembly 500 is coupled, may have the first diameter D1. In addition, the second body 131b may include the caulking portion 133 provided outside the first and second ring members 561 and 562. The inner diameter of the caulking portion 133 may have a second diameter D2. The second diameter D2 may be less than the first diameter D1.

A process of assembling the hose assembly 500 and the discharge pipe 130 will be described hereinafter. The discharge hose 510 may be inserted into the insertion portion 535 of the connector 530, and the hose fixing member 550 may be disposed on the outer circumferential surface of the discharge hose 510 and the outer circumferential surface of the insertion portion 535. As described above, the hose fixing member 550 may be provided by injecting liquid resin in a state in which the discharge hose 510 is coupled to the connector 530. By such a method, the hose assembly 500 may be manufactured.

The hose assembly 500 may be inserted into the discharge pipe 130 and a process of reducing the inner diameter of components, in which the first and second ring members 561 and 562 are located, of the discharge pipe 130, that is, a caulking process, may be performed. By the caulking process, the caulking portion 133 may be formed as shown in FIG. 8. The caulking portion 133 may be adhered to the first and second ring members 561 and 562.

By the caulking process, a reduction portion 135a may be formed at one or a first side of the caulking portion 133 and an enlargement portion 135b may be formed at the other or a second side thereof. The reduction portion 135a may be formed between the second body 131b having the inner diameter of the first diameter D1 and the caulking portion 133 and may obliquely extend from the second body 131b toward the caulking portion 133 in a direction in which the inner diameter is reduced. The enlargement portion 135b may be formed at an end 135c of the discharge pipe 130, into which the hose assembly 500 may be inserted, and may obliquely extend from the caulking portion 133 toward the end 135c in the direction in which the inner diameter is enlarged.

The enlargement portion 135b may support the hose fixing member 550. More specifically, a locking part or lock 557 in which the enlargement portion 135b may be locked may be formed in a lower end of the hose fixing member 550. An outer diameter of the hose fixing member 550 may have a third diameter D3 and the third diameter D3 may be greater than the inner diameter D2 of the caulking portion 133.

By such a configuration, the hose fixing member 550 may be locked in the enlargement portion 135b, the hose fixing member 550 or the discharge hose 510 and the connector 530 coupled to the hose fixing member 550 may be prevented from being inserted into the discharge pipe 130. As a result, the depth of the hose assembly 500 inserted into the discharge pipe 130 may be restricted to prevent the hose assembly 500 from being further inserted into the discharge pipe 130, thereby preventing noise from being generated in the hose assembly 500.

As the discharge hose 510 is stably coupled to the discharge pipe 130 through the connector 530 and the hose fixing member 550, it is possible to prevent the discharge hose 510 from being shaken, and thus, to prevent the discharge hose 510 from being damaged by contact with the shell 100 having a high temperature. In addition, it is possible to prevent refrigerant from leaking at a coupling position as coupling between the discharge hose 510 and the discharge pipe 130 is loosened.

Refrigerant flowing in the discharge hose 510 may be transferred to the discharge pipe 130 through the internal space of the connector 530. That is, the space of the inner circumferential side of the connector 530 may form a discharge flow channel.

Hereinafter, another embodiment will be described. This embodiment may be different from the previous embodiment in only some components and a difference between the embodiments will be focused upon. For the same components as the previous embodiment, refer to the description and reference numerals of the previous embodiment. Repetitive disclosure has been omitted.

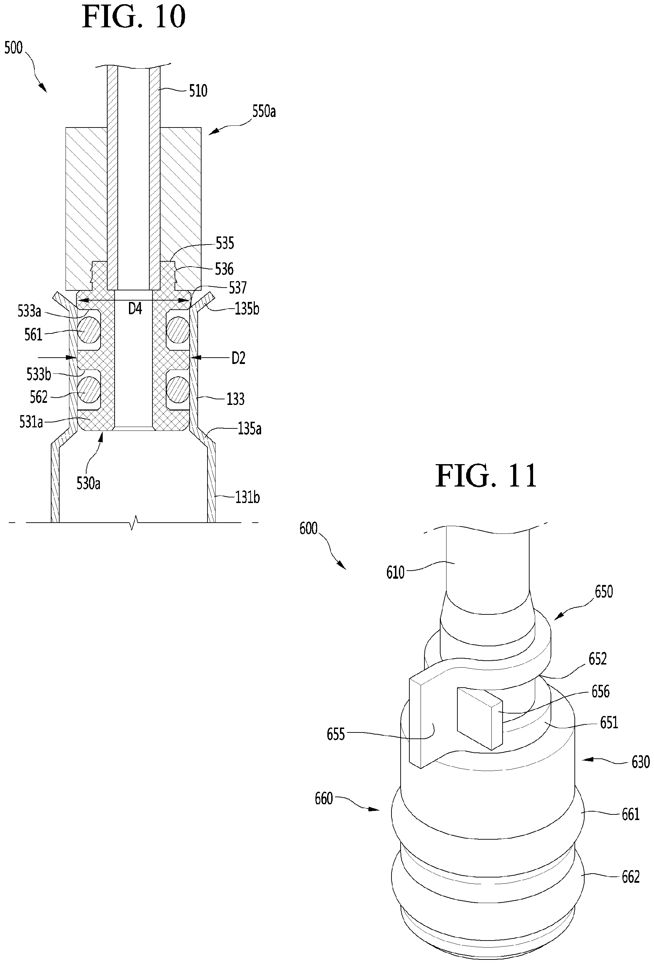

FIG. 10 is a view showing a state of coupling a hose assembly and a discharge pipe according to another embodiment. Referring to FIG. 10, the hose assembly 500a according to this embodiment may include a connector 530a that locks the discharge pipe 130. The connector 530a may also include a locking step 537 that locks the enlargement portion 135b of the discharge pipe 130.

More specifically, the connector 530a may include a connector body 531a having a substantially hollow cylindrical shape. First and second grooves 533a and 533b, in which first and second ring members 561 and 562 described in the previous embodiment may be mounted, may be formed in an outer circumferential surface of the connector body 531a.

An outer diameter D4 of the connector body 531a may be greater than inner diameter D2 of caulking portion 133. The locking step 537 may be formed on one surface, in which the first groove 533a is formed, of the connector body 531a as a stopper supported by the enlargement portion 135b. By such a configuration, the connector 530a may be stably supported by the discharge pipe 130.

The hose fixing member 550 may be disposed outside the discharge pipe 130. That is, the hose fixing member 550 may be spaced apart from the discharge pipe 130. For example, in FIG. 10, a height of a lower end of the hose fixing member 550 may be equal to or greater than a height of an upper end of the discharge pipe 130. By such a configuration, as the hose fixing member 550 does not interfere with the discharge pipe 130, damage may be suppressed.

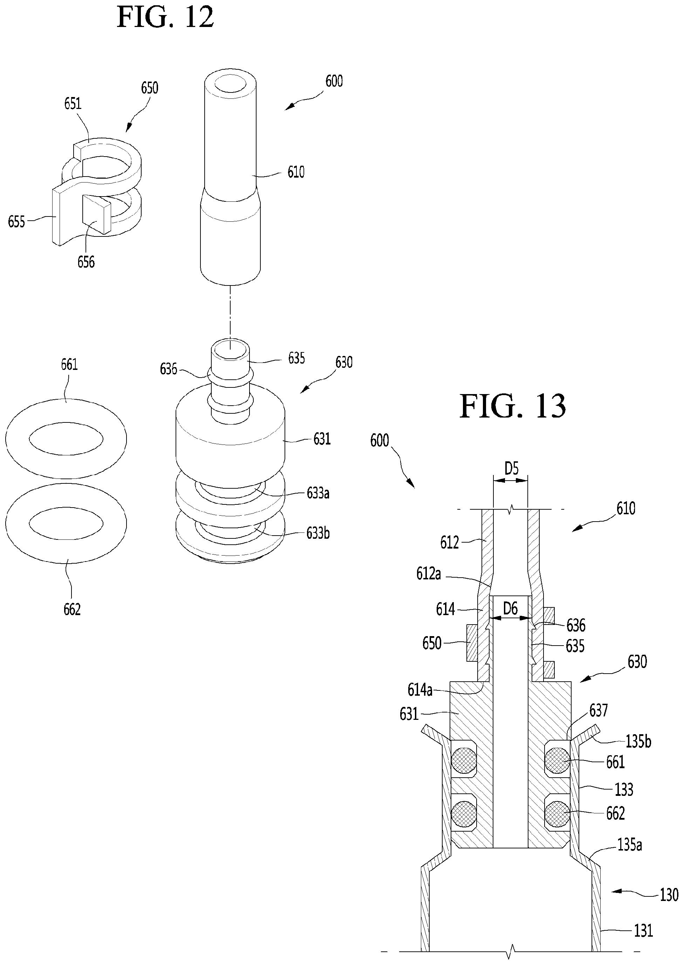

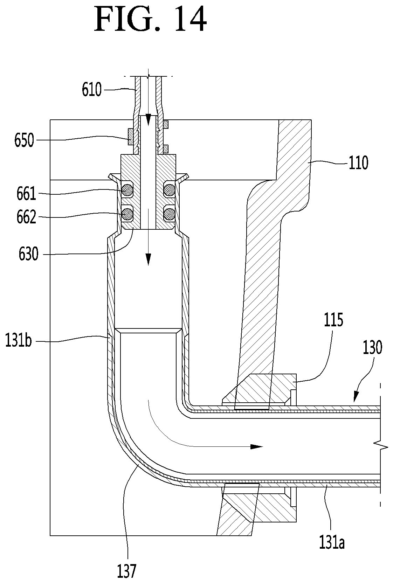

FIG. 11 is a perspective view showing a configuration of a hose assembly according to another embodiment. FIG. 12 is an exploded perspective view showing the configuration of the hose assembly according to the embodiment of FIG. 11. FIG. 13 is a view showing a state of coupling the hose assembly and a discharge pipe according to the embodiment of FIG. 11. FIG. 14 is a view showing a state of coupling the hose assembly and the discharge pipe to a shell according to the embodiment of FIG. 11.

Referring to FIGS. 11 to 14, the hose assembly 600 according to this embodiment may include a discharge hose 610 connected to discharge mufflers 425 and 450 to guide discharge of refrigerant and a connector 630 coupled to the discharge hose 610 to connect the discharge hose 610 with the discharge pipe 130. The hose assembly 600 may further include a hose fixing member provided on an outer circumferential surface of the discharge hose 510 to support the discharge hose 510. The hose fixing member 550 may be disposed outside the discharge pipe 130.

More specifically, the connector 630 may be made, for example, of metal. For example, the connector 530 may be made, for example, of steel. The connector 630 may include a connector body 631 having first and second grooves 633a and 633b. For the connector body 631 and the first and second grooves 633a and 633b, refer to the connector body 531 and the first and second grooves 533a and 533b of the previous embodiments.

Ring members may be mounted in the first and second grooves 633a and 633b, respectively. More specifically, the ring member may include a first ring member 661 mounted in the first groove 633a and a second ring member 662 mounted in the second groove 633b. The first and second ring members 561 and 562 may be made, for example, of rubber or synthetic resin.

In a state in which the first and second ring members 661 and 662 are coupled to an outer circumferential surface of the connector body 631, the connector body 631 may be inserted into the discharge pipe 130. By the caulking process of reducing the inner diameter of the discharge pipe 130, the first and second ring members 661 and 662 may be adhered to the caulking portion 133 of the discharge pipe 130.

The connector 530 may further include an insertion part or portion 635 that extends from the connector body 531 and inserted into the discharge hose 610. The insertion portion 635 may have a hollow cylindrical shape and may be inserted into a lower part or portion, that is, a second part or portion 614, of the discharge hose 610.

More specifically, the discharge hose 610 may include two parts or portions 612 and 614 having different diameters. The two portions 612 and 614 include a first part or portion 612 and the second portion 614. An inner diameter D5 of the first portion 612 may be less than an inner diameter D6 of the second portion 614.

In addition, the discharge hose 610 may further include a locking part or lock 612a formed between the first and second portions 612 and 614 to lock the insertion portion 635. The lock 612a may be an inclined part or portion between the first and second portions 612 and 614.

The insertion portion 635 of the connector 630 may be inserted into the second portion 614 and locked by the lock 612a. For example, an end of the insertion portion 635 may be locked by the lock 612a. By the lock 612a and the first portion 612, the insertion portion 635 may be prevented from being inserted into the first portion 612.

An end of the second portion 614, that is, a lower end in FIG. 13, may include a supporting part or support 614a supported by the connector body 631. For example, the support 614a may be supported by an upper surface the connector body 631 in FIG. 13. As the support 614a is supported by the connector body 631, it is possible to prevent the discharge hose 610 from moving downward or the connector 630 from moving upward.

A projection 636 may be provided on an outer circumferential surface of the insertion portion 635. The projection 636 may be provided in the circumferential direction of the insertion portion 635 to be locked in an inner circumferential surface of the second portion 614. Accordingly, the insertion portion 635 and the discharge hose 610 may be stably coupled, and the discharge hose 610 may be prevented from being separated from the connector 630.

The hose fixing member 650 may support the discharge hose 610 at an outside of the connector 630, that is, adhere the second portion 614 to the insertion portion 635. For example, the hose fixing member 650 may include an elastically deformed clip or clamp.

More specifically, the hose fixing member 650 may include a fixing body 651 rounded to surround an outer circumferential surface of the discharge hose 610. A cutting part or cutout 652 may be formed in the fixing body 651. The hose fixing member 650 may include manipulation parts or portions 655 and 656 provided at both sides of the fixing body 651 and capable of being grasped by a user for manipulation.

The manipulation portions 655 and 656 may include the first manipulation part or portion 655 provided at one or a first side of the fixing body 651 and the second manipulation part or portion 656 provided at the other or a second side of the fixing body 651. The second manipulation portion 656 may extend to be inserted into the cutout 652 of the fixing body 651. In addition, the first and second manipulation portions 655 and 656 may be disposed to cross each other.

When a user pressurizes or presses the first and second manipulation portions 655 and 656 such that the second manipulation portion 656 escapes from the cutout 652, the fixing body 651 may be deformed to be spaced apart from the outer circumferential surface of the discharge hose 610. In contrast, when the user releases the first and second manipulation portions 655 and 656, the fixing body 651 may be adhered to the outer circumferential surface of the discharge hose 610 by a restoring force. By the first and second manipulation portions 655 and 656, the discharge hose 610 may be adhered to the connector 630.

The discharge pipe 130 may include pipe body 131 having first and second bodies 131a and 131b and bending portion 137. The second body 131b may include caulking portion 133 provided outside the first and second ring members 661 and 662. In addition, reduction portion 135a may be formed at one side of the caulking portion 133 and enlargement portion 135b may be formed at the other side thereof. For this configuration, refer to the description of the previous embodiment.

The connector body 631 may be supported by the enlargement portion 135b. More specifically, locking step 637, in which the enlargement portion 135b may be locked, may be provided in a recessed part or recess forming the first groove 633a of the connector body 631. The locking step 637 may be supported by the enlargement portion 135b, thereby preventing the connector 630 or the discharge hose 610 from being inserted into the discharge pipe 130.

As a result, the depth of the hose assembly 600 inserted into the discharge pipe 130 may be restricted to prevent the hose assembly 600 from being inserted into the discharge pipe 130, thereby preventing noise from being generated in the hose assembly 600. As the discharge hose 610 is stably coupled to the discharge pipe 130 through the connector 630 and the hose fixing member 650, it is possible to prevent the discharge hose 610 from being shaken, and thus, to prevent the discharge hose 610 from being damaged by contact with the shell 100 having a high temperature. In addition, it is possible to prevent refrigerant from leaking at the coupling position as coupling between the discharge hose 610 and the discharge pipe 130 is loosened.

According to embodiments, as the discharge hose is stably coupled to the discharge pipe by the connector, the discharge hose may be prevented from being moved when refrigerant flows, and thus, the discharge hose may be prevented from being damaged by contact with the shell wall having a high temperature, thereby preventing refrigerant from leaking. In addition, as the connector may be made of steel, it is possible to prevent the connector from being damaged in a process, for example, a caulking process, of deforming an end of the discharge pipe after inserting the connector into the discharge pipe.

Further, as a plurality of grooves, in which ring members may be mounted, may be formed in the outer circumferential surface of the connector and the ring members may be adhered between the outer circumferential surface of the connector and the inner circumferential surface of the discharge pipe, the connector and the discharge pipe may be stably coupled in a state of being concentrically located. Accordingly, it is possible to prevent the discharge hose from moving.

Furthermore, as the outer diameter of the upper portion of the connector is greater than the inner diameter of a portion of the caulked discharge pipe and the connector is locked in the discharge pipe, the insertion depth of the connector may be restricted. For example, as the locking portion is formed in the recessed portion, in which the groove of the connector is formed, as a stopper supported by the discharge pipe, the connector may be stably supported by the discharge pipe. As a result, the insertion depth of the connector is restricted to a set or predetermined depth to prevent the connector or the discharge hose from being inserted into the discharge pipe, thereby preventing noise from being generated in the hose assembly.

In addition, as the discharge pipe penetrates through the shell and is bent upward in the shell, it is possible to easily assemble the connector or the discharge hose in the discharge pipe in a state in which the discharge pipe is assembled in the shell. That is, even though the internal space of the shell is small and crowded due to the components of the compressor, the connector or the discharge hose may be easily assembled using tools, for example.

As the hose fixing member is coupled to the discharge hose to support a connection portion between the connector and the discharge hose, it is possible to prevent the discharge hose from moving. As the outer diameter of the hose fixing member is greater than the inner diameter of the discharge pipe, it is possible to restrict the insertion depth of the connector to a set or predetermined depth. Accordingly, it is possible to prevent the connector or the discharge hose from being inserted into the discharge pipe, and thus, to prevent noise from being generated in the hose assembly.

Additionally, as the discharge hose or a projection supported by the hose fixing member may be formed on the outer circumferential surface of the connector, the connector and the discharge hose or the connector and the hose fixing member may be stably coupled. Accordingly, it is possible to prevent the discharge hose or the hose fixing member from being inserted into the discharge pipe.

Therefore, embodiments disclosed herein have been made in view of the above discussed problems and provide a reciprocating compressor in which a discharge hose and a discharge pipe are stably coupled. Embodiments disclosed herein also provide a reciprocating compressor including a connector made of steel in order to prevent the connector from being damaged. Embodiments disclosed herein also provide a reciprocating compressor including a ring member such that a connector and a discharge pipe may be concentrically located when the connector is assembled in the discharge pipe.

Embodiments disclosed herein provide a reciprocating compressor having a stopper structure for constantly maintaining a depth of a connector inserted into a discharge pipe. Embodiments disclosed herein further provide a reciprocating compressor having a structure in which a discharge pipe is bent in a shell such that a connector or a discharge hose may be easily assembled in the discharge pipe.

A reciprocating compressor according to an embodiment may include a discharge hose configured to discharge refrigerant compressed in a cylinder, a connector coupled to the discharge hose and provided inside the discharge pipe, and a hose fixing member provided on an outer circumferential surface of the discharge hose and configured to support the discharge hose, thereby stably coupling the discharge hose with the discharge pipe. The connector may be made of steel, thereby preventing damage.

A ring member provided on an outer circumferential surface of the connector and contacting an inner circumferential surface of the discharge pipe may be included, thereby stably coupling the connector with the discharge pipe. The connector may include a connector body having a groove in which the ring member is mounted, and an insertion portion that extends from the connector body and coupled to the discharge hose.

The insertion portion may be inserted into the hose fixing member, and the hose fixing member may be disposed to surround the discharge hose and the insertion portion, thereby stably coupling the hose fixing member with the connector. The insertion portion may include an insertion hole, into which the discharge hose may be inserted, and a stepped part or step formed on an inner circumferential surface of the insertion portion and configured to support the discharge hose inserted through the insertion hole.

The discharge pipe may include a caulking portion that contacts the ring member, and an enlargement portion provided at one side of the caulking portion and obliquely extending to enlarge an inner diameter of the caulking portion.

A locking step provided on the hose fixing member or the connector body and supported by the enlargement portion may be included. The hose fixing member may include a clip or a clamp, thereby stably supporting the discharge hose.

The connector may include a connector body including a ring member, and an insertion portion that extends from the connector body and inserted into the discharge hose. The discharge hose may include a first portion having a set or predetermined inner diameter and a second portion having an inner diameter greater than an inner diameter of the first portion and inserted into the insertion portion. The clip or the clamp may be coupled to the second portion.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A reciprocating compressor, comprising:
shell (100) to which a discharge pipe (130) is coupled;
a cylinder (330) provided inside of the shell (100) and configured to compress a refrigerant;
a discharge hose (510) made of rubber or plastic and configured to discharge the refrigerant compressed in the cylinder (330);
a connector (530) coupled to the discharge hose (510) and provided inside of the discharge pipe (130); and
a hose fixing member (550) provided on an outer circumferential surface of the discharge hose (510) and configured to support the discharge hose (510);
**characterized in that**
the connector (530) includes:
a connector body (531) having at least one groove (533a, 533b); and
an insertion portion (535) that extends from the connector body (531) and is coupled to the discharge hose (510), the insertion portion (535) being inserted into the hose fixing member (550),
wherein the connector (530) is made of metal, and
wherein the hose fixing member (550) is made of plastic and disposed to surround the discharge hose (510).

2. The reciprocating compressor according to claim 1, wherein the connector (530) is made of steel.

3. The reciprocating compressor according to claim 1 or 2, further comprising at least one ring member (561, 562) provided on an outer circumferential surface of the connector (530) and contacting an inner circumferential surface of the discharge pipe (130).

4. The reciprocating compressor according to any one of claims 1 to 3, further comprising at least one ring member (561, 562) wherein the at least one groove (533a, 533b) of the connector body (531) includes first and second grooves (533a, 533b) in which the at least one ring member (561, 562) is mounted.

5. The reciprocating compressor according to any one of claims 1 to 4, wherein the insertion portion (535) includes:
an insertion hole (535a), into which the discharge hose (510) is inserted; and
a step (538) formed on an inner circumferential surface of the insertion portion (535) and configured to support the discharge hose (510) inserted through the insertion hole (535a).

6. The reciprocating compressor according to claim 4 or 5, wherein the discharge pipe (130) includes at least one of
a caulking portion (133) that contacts the at least one ring member (561, 562); and
an enlargement portion (135b) provided at one side of the caulking portion (133) and obliquely extending to enlarge an inner diameter of the caulking portion (133).

7. The reciprocating compressor according to claim 6, further comprising a locking step (537) provided on the hose fixing member (550) or the connector body (531), the locking step being supported by the enlargement portion (135b).

8. The reciprocating compressor according to claim 6 or 7, wherein an outer diameter of the hose fixing member (550) is greater than an inner diameter of the caulking portion (133).

9. The reciprocating compressor according to any one of the preceding claims, wherein the hose fixing member (650) includes a hose penetration hole (555) to which the discharge hose (610) is coupled, and the discharge hose (610) is disposed to extend through the hose fixing member (650).

10. The reciprocating compressor according to any one of the preceding claims, wherein the hose fixing member (650) is coupled to an upper portion of the discharge pipe (130), and wherein a height of a lower end of the hose fixing member (650) is equal to or greater than a height of an upper end of the discharge pipe (130).

11. The reciprocating compressor according any one of the preceding claims, wherein the hose fixing member (650) includes a clip or a clamp.

12. The reciprocating compressor according to claim 10 or 11, wherein the hose fixing member (650) includes:
a fixing body (651) rounded to surround an outer circumferential surface of the discharge hose (610), the fixing body (651) having a cutout (652);
a first manipulation portion (655) provided at a first side of the fixing body (651); and
a second manipulation portion (656) provided at a second side of the fixing body (651) and inserted into the cutout (652).

13. The reciprocating compressor according to claim 11, wherein the discharge hose (610) includes:
a first portion (612) having a first inner diameter (D5); and
a second portion (614) having a second inner diameter (D6) greater than the first inner diameter (D5) and having the insertion portion (635) inserted therein, wherein the clip or the clamp is coupled to the second portion (614).

## Patentansprüche

1. Kolbenkompressor, der Folgendes umfasst:
ein Gehäuse (100), mit dem ein Auslassrohr (130) gekoppelt ist;
einen Zylinder (330), der im Inneren des Gehäuses (100) vorgesehen ist und konfiguriert ist, ein Kühlmittel zu komprimieren;
einen Auslassschlauch (510), der aus Gummi oder Kunststoff hergestellt ist und konfiguriert ist, das Kühlmittel, das im Zylinder (330) komprimiert worden ist, auszulassen;
einen Verbinder (530), der mit dem Auslassschlauch (510) gekoppelt ist und im Inneren des Auslassrohrs (130) vorgesehen ist; und
ein Schlauchbefestigungselement (550), das auf einer Außenumfangsfläche des Auslassschlauchs (510) vorgesehen ist und konfiguriert ist, den Auslassschlauch (510) zu tragen;
**dadurch gekennzeichnet, dass**
der Verbinder (530) Folgendes enthält:
einen Verbinderkörper (531), der mindestens eine Rille (533a, 533b) aufweist; und
einen Einführungsabschnitt (535), der sich vom Verbinderkörper (531) erstreckt und mit dem Auslassschlauch (510) gekoppelt ist, wobei der Einführungsabschnitt (535) in das Schlauchbefestigungselement (550) eingeführt ist,
wobei der Verbinder (530) aus Metall hergestellt ist, und
wobei das Schlauchbefestigungselement (550) aus Kunststoff hergestellt ist und derart angeordnet ist, dass es den Auslassschlauch (510) umgibt.

2. Kolbenkompressor nach Anspruch 1, wobei der Verbinder (530) aus Stahl hergestellt ist.

3. Kolbenkompressor nach Anspruch 1 oder 2, der ferner mindestens ein Ringelement (561, 562) umfasst, das auf einer Außenumfangsfläche des Verbinders (530) vorgesehen ist und eine Innenumfangsfläche des Auslassrohrs (130) berührt.

4. Kolbenkompressor nach einem der Ansprüche 1 bis 3, der ferner mindestens ein Ringelement (561, 562) umfasst, wobei die mindestens eine Rille (533a, 533b) des Verbinderkörpers (531) eine erste und eine zweite Rille (533a, 533b) enthält, in denen das mindestens eine Ringelement (561, 562) angebracht ist.

5. Kolbenkompressor nach einem der Ansprüche 1 bis 4, wobei der Einführungsabschnitt (535) Folgendes enthält:
ein Einführungsloch (535a), in das der Auslassschlauch (510) eingeführt ist; und
eine Stufe (538), die auf einer Innenumfangsfläche des Einführungsabschnitts (535) gebildet ist und konfiguriert ist, den Auslassschlauch (510) zu tragen, der durch das Einführungsloch (535a) eingeführt ist.

6. Kolbenkompressor nach Anspruch 4 oder 5, wobei das Auslassrohr (130) Folgendes enthält:
einen Abdichtungsabschnitt (133), der das mindestens eine Ringelement (561, 562) berührt; und
einen Vergrößerungsabschnitt (135b), der auf einer Seite des Abdichtungsabschnitts (133) vorgesehen ist und sich schräg erstreckt, derart, dass ein Innendurchmesser des Abdichtungsabschnitts (133) vergrößert wird.

7. Kolbenkompressor nach Anspruch 6, der ferner eine Verriegelungsstufe (537) umfasst, die auf dem Schlauchbefestigungselement (550) oder dem Verbinderkörper (531) vorgesehen ist, wobei die Verriegelungsstufe durch den Vergrößerungsabschnitt (135b) getragen wird.

8. Kolbenkompressor nach Anspruch 6 oder 7, wobei ein Außendurchmesser des Schlauchbefestigungselements (550) größer als ein Innendurchmesser des Abdichtungsabschnitts (133) ist.

9. Kolbenkompressor nach einem der vorhergehenden Ansprüche, wobei das Schlauchbefestigungselement (650) ein Schlauchdurchdringungsloch (555) enthält, mit dem der Auslassschlauch (610) gekoppelt ist, und der Auslassschlauch (610) derart angeordnet ist, dass er sich durch das Schlauchbefestigungselement (650) erstreckt.

10. Kolbenkompressor nach einem der vorhergehenden Ansprüche, wobei das Schlauchbefestigungselement (650) mit einem oberen Abschnitt des Auslassrohrs (130) gekoppelt ist und wobei eine Höhe eines unteren Endes des Schlauchbefestigungselements (650) größer oder gleich einer Höhe eines oberen Endes des Auslassrohrs (130) ist.

11. Kolbenkompressor nach einem der vorhergehenden Ansprüche, wobei das Schlauchbefestigungselement (650) eine Schelle oder eine Klemme enthält.

12. Kolbenkompressor nach Anspruch 10 oder 11, wobei das Schlauchbefestigungselement (650) Folgendes enthält:
einen Befestigungskörper (651), der derart abgerundet ist, dass er eine Außenumfangsfläche des Auslassschlauchs (610) umgibt, wobei der Befestigungskörper (651) einen Ausschnitt (652) aufweist;
einen ersten Handhabungsabschnitt (655), der auf einer ersten Seite des Befestigungskörpers (651) vorgesehen ist; und
einen zweiten Handhabungsabschnitt (656), der auf einer zweiten Seite des Befestigungskörpers (651) vorgesehen und in den Ausschnitt (652) eingeführt ist.

13. Kolbenkompressor nach Anspruch 11, wobei der Auslassschlauch (610) Folgendes enthält:
einen ersten Abschnitt (612), der einen ersten Innendurchmesser (D5) aufweist; und
einen zweiten Abschnitt (614), der einen zweiten Innendurchmesser (D6) aufweist, der größer als der erste Innendurchmesser (D5) ist, wobei der Einführungsabschnitt (635) darin eingeführt ist, wobei die Schelle oder die Klemme mit dem zweiten Abschnitt (614) gekoppelt ist.

## Revendications

1. Compresseur alternatif, comportant :
une coque (100) à laquelle un tuyau d'évacuation (130) est couplé ;
un cylindre (330) agencé à l'intérieur de la coque (100) et configuré pour comprimer un fluide frigorigène ;
un flexible d'évacuation (510) en caoutchouc ou en matière plastique et configuré pour évacuer le fluide frigorigène comprimé dans le cylindre (330) ;
un raccord (530) couplé au flexible d'évacuation (510) et agencé à l'intérieur du tuyau d'évacuation (130) ; et
un élément de fixation de flexible (550) agencé sur une surface circonférentielle extérieure du flexible d'évacuation (510) et configuré pour supporter le flexible d'évacuation (510) ;
**caractérisé en ce que**
le raccord (530) inclut :
un corps de raccord (531) ayant au moins une rainure (533a, 533b) ; et
une partie d'insertion (535) qui s'étend à partir du corps de raccord (531) et est couplée au flexible d'évacuation (510), la partie d'insertion (535) étant insérée dans l'élément de fixation de flexible (550),
dans lequel le raccord (530) est en métal, et
dans lequel l'élément de fixation de flexible (550) est en matière plastique et disposé de manière à entourer le flexible d'évacuation (510).

2. Compresseur alternatif selon la revendication 1, dans lequel le raccord (530) est en acier.

3. Compresseur alternatif selon la revendication 1 ou 2, comportant en outre au moins un élément annulaire (561, 562) agencé sur une surface circonférentielle extérieure du raccord (530) et venant en contact avec une surface circonférentielle intérieure du tuyau d'évacuation (130).

4. Compresseur alternatif selon l'une quelconque des revendications 1 à 3, comportant en outre au moins un élément annulaire (561, 562) dans lequel la au moins une rainure (533a, 533b) du corps de raccord (531) inclut des première et seconde rainures (533a, 533b) dans lesquelles le au moins un élément annulaire (561, 562) est monté.

5. Compresseur alternatif selon l'une quelconque des revendications 1 à 4, dans lequel la partie d'insertion (535) inclut :
un trou d'insertion (535a), dans lequel le flexible d'évacuation (510) est inséré ; et
un gradin (538) formé sur une surface circonférentielle intérieure de la partie d'insertion (535) et configuré pour supporter le flexible d'évacuation (510) inséré à travers le trou d'insertion (535a).

6. Compresseur alternatif selon la revendication 4 ou 5, dans lequel le tuyau d'évacuation (130) inclut au moins un élément parmi
une partie de matage (133) qui vient en contact avec le au moins un élément annulaire (561, 562) ; et
une partie d'élargissement (135b) agencée sur un côté de la partie de matage (133) et s'étendant en oblique pour élargir un diamètre intérieur de la partie de matage (133).

7. Compresseur alternatif selon la revendication 6, comportant en outre un gradin de blocage (537) agencé sur l'élément de fixation de flexible (550) ou le corps de raccord (531), le gradin de blocage étant supporté par la partie d'élargissement (135b).

8. Compresseur alternatif selon la revendication 6 ou 7, dans lequel un diamètre extérieur de l'élément de fixation de flexible (550) est plus grand qu'un diamètre intérieur de la partie de matage (133).

9. Compresseur alternatif selon l'une quelconque des revendications précédentes, dans lequel l'élément de fixation de flexible (650) inclut un trou de pénétration de flexible (555) auquel le flexible d'évacuation (610) est couplé, et le flexible d'évacuation (610) est disposé de manière à s'étendre à travers l'élément de fixation de flexible (650).

10. Compresseur alternatif selon l'une quelconque des revendications précédentes, dans lequel l'élément de fixation de flexible (650) est couplé à une partie supérieure du tuyau d'évacuation (130), et dans lequel une hauteur d'une extrémité inférieure de l'élément de fixation de flexible (650) est égale ou supérieure à une hauteur d'une extrémité supérieure du tuyau d'évacuation (130).

11. Compresseur alternatif selon l'une quelconque des revendications précédentes, dans lequel l'élément de fixation de flexible (650) inclut une agrafe ou un collier.

12. Compresseur alternatif selon la revendication 10 ou 11, dans lequel l'élément de fixation de flexible (650) inclut :
un corps de fixation (651) arrondi pour entourer une surface circonférentielle extérieure du flexible d'évacuation (610), le corps de fixation (651) ayant une découpe (652) ;
une première partie de manipulation (655) agencée sur un premier côté du corps de fixation (651) ; et
une seconde partie de manipulation (656) agencée sur un second côté du corps de fixation (651) et insérée dans la découpe (652).

13. Compresseur alternatif selon la revendication 11, dans lequel le flexible d'évacuation (610) inclut :
une première partie (612) ayant un premier diamètre intérieur (D5) ; et
une seconde partie (614) ayant un second diamètre intérieur (D6) plus grand que le premier diamètre intérieur (D5) et ayant la partie d'insertion (635) insérée dans celui-ci, dans lequel l'agrafe ou le collier est couplé à la seconde partie (614).
